# EUROPÄISCHE PATENTSCHRIFT

(11) **EP 1 834 158 B1**
(45) Veröffentlichungstag und Bekanntmachung des Hinweises auf die Patenterteilung: **14.10.2009**
(21) Anmeldenummer: 05825524.1
(22) Anmeldetag: 26.11.2005
(51) Int. Cl.: G01D 11/24, G01D 11/02, G01D 5/347

(54) **DREHGEBER**
ROTARY TRANSDUCER
TRANSDUCTEUR ROTATIF

(30) Priorität: 28.12.2004 JP 2004380677
(43) Veröffentlichungstag der Anmeldung: 19.09.2007
(73) Patentinhaber: Dr. Johannes Heidenhain GmbH, 83292 Traunreut (DE)
(72) Erfinder: NAKAMURA, Yoshiyuki, Aikou-gun, Kanagawa-ken 243-0303 (JP); TAKAHASHI, Masato, Hachiouji-shi, Tokyo-to 192-0363 (JP)
(86) Internationale Anmeldenummer: PCT/EP2005/012665
(87) Internationale Veröffentlichungsnummer: WO 2006/069613

(56) Entgegenhaltungen:
- EP-A- 1 043 570
- EP-A- 1 258 710
- DE-A1- 10 137 400
- DE-A1- 19 651 660
- DE-C1- 4 446 243
- US-A- 5 571 960

## Beschreibung

Die vorliegende Erfindung betrifft einen Drehgeber gemäß Anspruch 1, der z.B. an der Welle eines Rotors in einem Motor angeordnet ist und die Umdrehungszahl und/oder die Drehwinkelposition des Rotors feststellt.

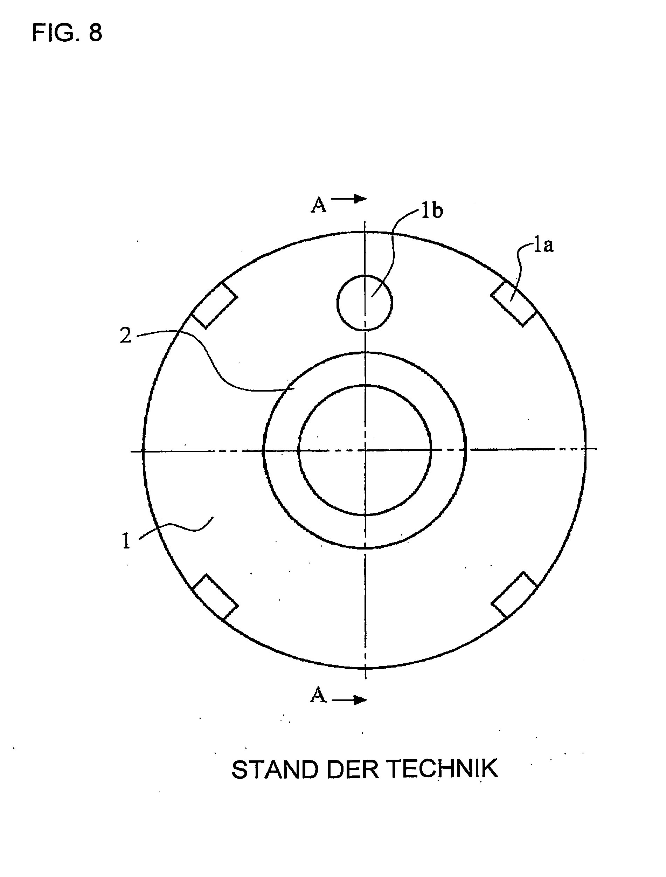

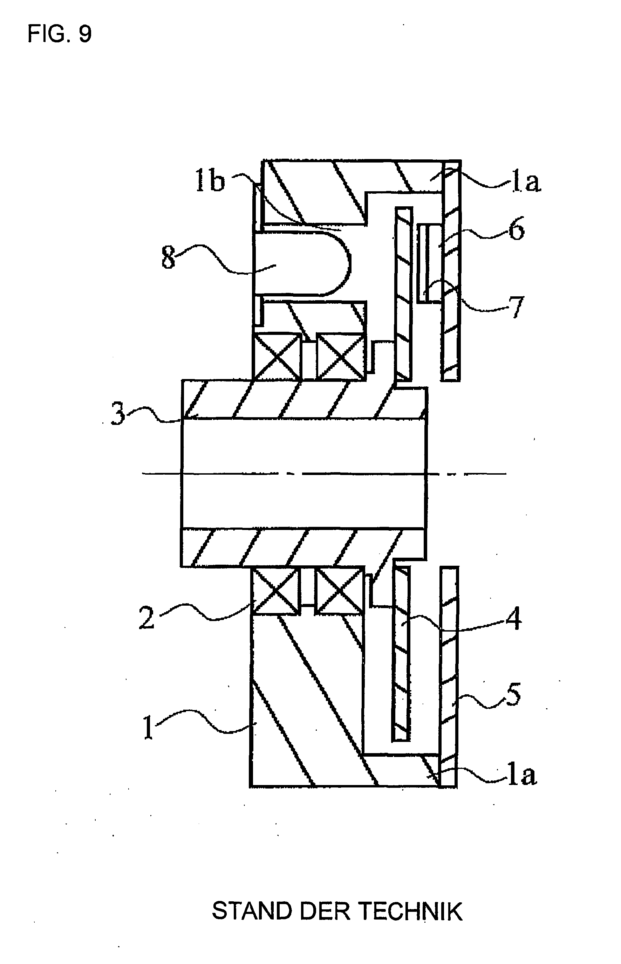

Herkömmliche Drehgeber sind wie zum Beispiel in Figur 8 und 9 gezeigt aufgebaut. Figur 8 zeigt hierbei eine Vorderansicht mit der Gestaltung des Drehgeber-Grundkörpers und des Lagerbereichs; Figur 9 zeigt eine Schnittansicht entlang der Linie A-A von Figur 8, wobei die Darstellung von Figur 8 mit weiteren Komponenten des Drehgebers ergänzt wurde. Zur Erleichterung des Verständnisses des Aufbaus wurden in Figur 9 auch die Grundplattenstützen 1 a, die sich eigentlich nicht an dieser Stelle der Schnittdarstellung befinden, im Schnitt angegeben.

In den Figuren weist der Drehgeber einen Drehgeber-Grundkörper 1, am Drehgeber-Grundkörper 1 angeordnete Lager 2, und eine durch diese Lager 2 drehbar gehaltene hohle Welle 3 auf. Die Welle eines zu messenden Objekts wird in den hohlen Bereich des in der Figur linken Endes der Welle 3 eingeführt, wodurch eine Kopplung der Welle 3 des Drehgebers mit der Umdrehung des zu messenden Objekts möglich wird. Am rechten Ende der Welle 3 ist eine Teilscheibe 4 angebracht, die sich mit der Drehung der Welle gekoppelt dreht. Aufgrund der Drehung rotiert die kreisringförmige Messteilung auf der Teilscheibe 4, die aus alternierend angeordneten Schlitzen und undurchlässigen Bereichen besteht.

An den Stützen 1a des Drehgeber-Grundkörpers 1 ist eine Grundplatte 5 bzw. Platine angebracht, die der Form des Drehgeber-Grundkörpers 1 entspricht. An einer bestimmten Stelle der Grundplatte 5 ist ein Detektorelement 6 angeordnet, das mit einem festen, vorgeordneten Abtastteilung 7 versehen ist. Zudem sind - nicht dargestellte - weitere elektronische Elemente und Schaltungen zur Verarbeitung der elektrischen Signale vom Detektorelement 6 auf der Grundplatte ausgebildet und angeordnet. Eine Lichtquelle 8 ist in einer am Drehgeber-Grundkörper 1 ausgebildeten Ausnehmung bzw. Öffnung 1b angeordnet, wobei die jeweiligen Positionen so abgestimmt sind, dass sich bei dazwischenliegender Teilscheibe 4 die Lichtquelle 8 gegenüber dem Detektorelement 6 befindet. Das Licht der Lichtquelle 8 verläuft durch die an der Teilscheibe 4 ausgebildeten durchlässigen Schlitze und beaufschlagt das Detektorelement 6, dem die feste Abtastteilung 7 vorgeordnet ist. Über die Detektion des Lichtes, das die Messteilung der Teilscheibe durchtritt, kann die Umdrehungsposition der Teilscheibe 4, das heißt, die Umdrehungsposition des zu messenden Objekts, erfasst werden.

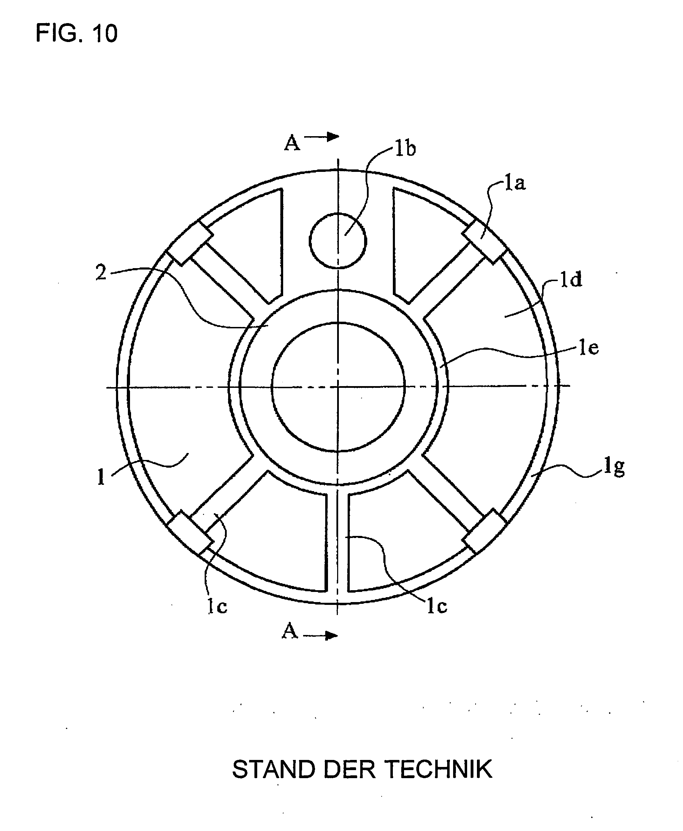

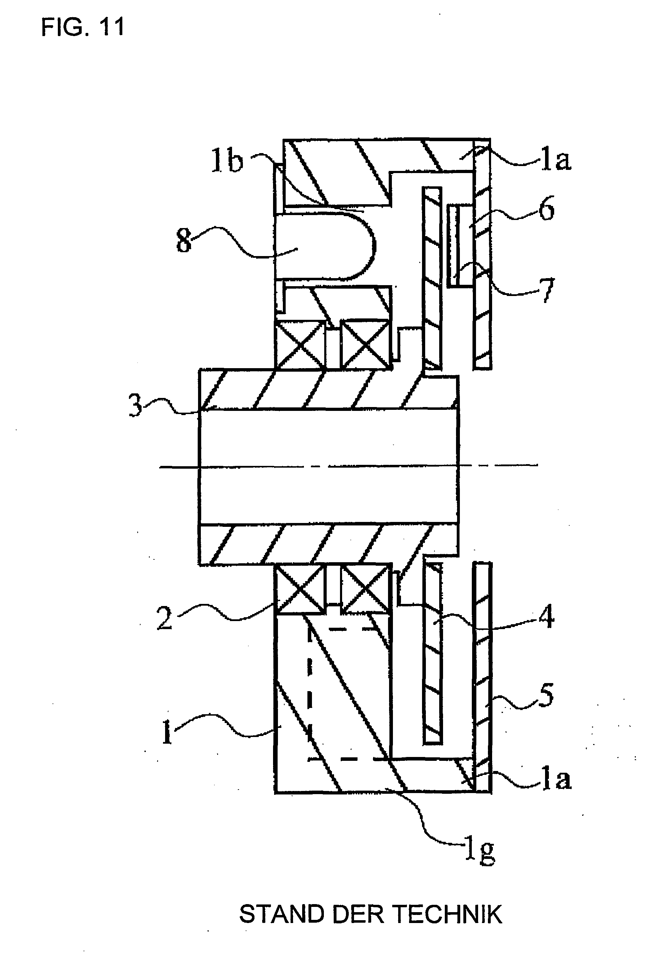

Figur 10 und 11 zeigen den Aufbau eines anderen Drehgebers gemäß dem Stand der Technik, wobei Figur 10 eine Vorderansicht der Gestaltung des Drehgeber-Grundkörpers und des Lagerbereichs ist; Figur 11 zeigt eine Schnittansicht entlang der Linie A-A von Figur 10, bei der die Darstellung von Figur 10 mit weiteren Komponenten des Drehgebers ergänzt wurde. In diesem Beispiel ist aus Gewichtsgründen zwischen dem Außenumfang 1g des Drehgeber-Grundkörpers 1 und einem Lagerfixierungsbereich 1e ein dünner Bereich 1d ausgebildet und zwischen den Stützen 1a und dem Lagerfixierungsbereich 1e eine Rippe 1c zur Verstärkung ausgebildet. Die weiteren Komponenten entsprechen jenen von Figur 8 und 9, weshalb gleiche Komponenten mit gleichen Bezugszeichen versehen sind und auf eine Erläuterung derselben verzichtet wird.

Bei derart aufgebauten, herkömmlichen Drehgebern bestehen die folgenden Probleme. Wie oben erwähnt ist die Welle 3 über die Lager 2 am Drehgeber-Grundkörper 1 angeordnet. Während der Drehgeber-Grundkörper 1 normalerweise aus einem leichten und leicht zu bearbeitenden Metall wie Aluminium o.ä. gebildet ist, wird als Material für die Lager 3 häufig Eisen gewählt. Daher kommt es bei einer Veränderung der Temperatur in der Drehgeberumgebung aufgrund der unterschiedlichen Wärmeausdehnungskoeffizienten wegen der unterschiedlichen Materialeigenschaften der beiden Materialien zu einer unerwünschten mechanischen Beanspruchung bzw. Belastung des Drehgebers. Durch die Beanspruchung auf Seiten des Drehgeber-Grundkörpers 1 können sich die Lager 2 verformen, wodurch Umdrehungsunregelmäßigkeiten oder Drehmomentschwankungen der Welle 3 entstehen können.

Dies kann sich sogar auf das zu messende Objekt auswirken. Es besteht demzufolge die Gefahr einer nachteiligen Beeinflussung der genauen Messung der Umdrehungsgeschwindigkeit und der Umdrehungsposition bzw. einer nachteiligen Beeinflussung der Positionierungsgenauigkeit. Wenn der Anschluss an das zu messende Objekt über einen Riemen o.ä. erfolgt, kommt es zu einem Rutschen des Riemens und es treten Messfehler auf.

Optische Drehgeber mit einem derartigen Aufbau sind etwa aus der japanischen Patentanmeldung JP 2001-027551 bekannt. Das erwähnte Problem im Zusammenhang mit dem Einfluss unterschiedlicher Wärmeausdehnungskoeffizienten des Drehgeber-Grundkörper und der Lager wird jedoch darin nicht erwähnt.

Aufgabe der vorliegenden Erfindung ist es daher, einen Drehgeber mit einem Aufbau anzugeben, bei dem der Einfluss durch Beanspruchungsverformungen aufgrund der unterschiedlichen Wärmeausdehnungskoeffizienten des Drehgeber-Grundkörpers und der Lager beseitigt ist und Umdrehungsunregelmäßigkeiten oder Drehmomentschwankungen durch Temperaturveränderungen möglichst nicht auftreten.

Diese Aufgabe wird gelöst durch einen Drehgeber mit den Merkmalen des Anspruchs 1.

Vorteilhafte Ausführungsformen des erfindungsgemäßen Drehgebers ergeben sich aus den Maßnahmen in den abhängigen Ansprüchen.

Erfindungsgemäß weist der Drehgeber zur Feststellung der Umdrehung eines zu messenden Objekts eine Welle auf, die mit der Drehung des zu messenden Objekts gekoppelt ist, mindestens ein Lager, in welchem die Welle drehbar gelagert ist sowie einen Drehgeber-Grundkörper mit einem Lagerfixierungsbereich, an dem das Lager fixiert ist. Am Drehgeber-Grundkörper ist mindestens ein Vertiefungsbereich ausgebildet, der entlang des Umfangs des Lagerfixierungsbereichs mit einer bestimmten Tiefe so fortlaufend ausgebildet ist, dass er zumindest den halben Umfang des Lagerfixierungsbereichs umgibt.

Vorzugsweise ist die Tiefe des Vertiefungsbereichs zumindest größer als die Dicke eines Lagers gewählt.

In einer möglichen Ausführungsform erstreckt sich der Vertiefungsbereich über den gesamten Umfang des Lagerfixierungsbereichs.

In einer weiteren möglichen Ausführungsform ist der Vertiefungsbereich im Inneren des Drehgebers ausgebildet.

In einer alternativen Ausführungsform ist der Vertiefungsbereich an der Drehgeber-Außenseite ausgebildet.

In einer weiteren Ausführungsform umfasst der Vertiefungsbereich zwei Teil-Vertiefungsbereiche, von denen einer erster Teil-Vertiefungsbereich im Inneren des Drehgebers ausgebildet ist und ein zweiter Teil-Vertiefungsbereich an der Drehgeber-Außenseite ausgebildet ist.

Nach der vorliegenden Erfindung kann ein Drehgeber mit einem Aufbau bereitgestellt werden, bei dem der Einfluss der Beanspruchungsverformungen aufgrund der unterschiedlichen Wärmeausdehnungskoeffizienten des Drehgeber-Grundkörpers und der Lager minimiert wird und demzufolge Umdrehungsunregelmäßigkeiten oder Drehmomentschwankungen durch Temperaturveränderungen nur in geringem Umfang auftreten können. Dadurch wird eine hochpräzise Messung noch genauer möglich, zudem kann auch der Einfluss auf das zu messende Objekt auf ein Mindestmaß verringert werden.

Durch die erfindungemäße Ausbildung der Vertiefung am Umfangsbereich des Lagerfixierungsbereichs des Drehgeber-Grundkörpers ist zumindest ein Teil des Lagerfixierungsbereichs als dünner Bereich ausgeführt, wodurch der Einfluss einer Beanspruchung, die sich aus den unterschiedlichen Wärmeausdehnungskoeffizienten des Drehgeber-Grundkörpers und der Lager ergibt, unterdrückt werden kann. Dieser dünne Bereich weist die Funktion auf, die Entstehung der Beanspruchung selbst zu verringern und eine ggf. entstandene Beanspruchung entweichen zu lassen.

Da auf die Ausbildung eines dünnen Bereichs abgezielt wird, ist es wünschenswert, den Vertiefungsbereich nahe am Lagerfixierungsbereich auszubilden. Die Wirksamkeit ist grundsätzlich umso höher, je geringer die Dicke des dünnen Bereichs ist. Da es jedoch bei einer zu geringen Dicke zu einer zu geringen mechanischen Fixierung der Lager kommen kann, sollte die erforderliche Dicke aus einer Gesamtbeurteilung von Größe, Form und Aufbau usw. des Drehgebers abgeleitet bzw. optimiert werden.

Da die Tiefe des Vertiefungsbereichs identisch zur Höhe des dünnen Bereichs ist, ist die mechanische Wirksamkeit grundsätzlich umso höher, je größer der dünne Bereich ist, d.h., je größer die Tiefe der Vertiefung ist. Da eine zu großen Tiefe jedoch einen negativen Einfluss hinsichtlich der mechanischen Gesamtstabilität hat, sollte die Tiefe wie bereits oben erläutert aus einer Gesamtbeurteilung der Größe, der Form, des Aufbaus, der benötigten Stärke usw. des Drehgebers abgeleitet werden. Da normalerweise zwei Lager verwendet werden, sollte die Tiefe vorzugsweise mindestens die Dicke eines Lagers in Richtung der Wellen-Längsachse betragen. Besonders vorteilhaft erweist sich, wenn eine Tiefe bis zur Anbringungsstelle des zweiten Lagers gewählt wird und insbesondere eine Tiefe bis zu mindestens 1/3 der Anbringungsstelle des zweiten Lagers gewählt wird.

Die Breite des Vertiefungsbereichs in radialer Richtung ist im Wesentlichen nicht beschränkt und kann beliebig gewählt werden. Doch da eine zu große Breite zu einer verringerten mechanischen Stabilität des Drehgeber-Grundkörpers führen kann, sollte es sich um eine gewählte Breite handeln, die eine leichte Bearbeitung ermöglicht und eventuelle Verformungen hinreichend gut aufnehmen kann. Normalerweise liegt diese Größe bei klein-bauenden Drehgebern im Bereich von einigen mm bis zu knapp über 10 mm.

Was die Länge des Vertiefungsbereichs in Well-Umfangsrichtung, das heißt, die Länge des dünnen Bereichs, betrifft, so ist die Wirksamkeit desselben umso höher, je größer diese Länge ist. Ferner ist es günstig, wenn die Länge den gesamten Umfang der Welle umgibt. Sollte dies konstruktiv-bedingt ggf. nicht möglich sein, so sollte die Länge zumindest möglichst lang ausgeführt werden. Wenn nicht der gesamte Umfang der Welle umgeben wird, sondern nur ein Teil desselben, so sollte vorzugsweise mindestens der halbe Umfang der Welle, insbesondere mindestens 2/3 der Welle umgeben werden. Grundsätzlich ist die Wirksamkeit umso höher, je näher man mit der Länge des Vertiefungsbereichs dem gesamten Umfang kommt.

Der Vertiefungsbereich kann sowohl an der Außenseite als auch an der Innenseite des Drehgeber-Grundkörpers, d.h., an der Seite, an der die Teilscheibe angebracht ist, als auch an der gegenüberliegenden Seite, ausgebildet werden; ferner kann der Vertiefungsbereich aber auch an beiden Seiten ausgebildet werden. Die Entscheidung, an welcher Seite die Ausbildung erfolgt, kann je nach dem Aufbau und der Art des Drehgebers, der geforderten Stärke usw. getroffen werden.

Weitere Vorteile und Einzelheiten der vorliegenden Erfindung ergeben sich aus der nachfolgenden Beschreibung von Ausführungsbeispielen anhand der beiliegenden Figuren.

### Dabei zeigt

- Figur 1: eine Vorderansicht der Gestaltung des Drehgeber- Grundkörpers und des Lagerbereichs einer ersten Ausführungsform des erfindungsgemäßen Drehge- bers;
- Figur 2: eine Schnittansicht entlang der Linie A-A von Figur 1;
- Figur 3: eine Vorderansicht der Gestaltung des Drehgeber- Grundkörpers und des Lagerbereichs einer zweiten Ausführungsform des erfindungsgemäßen Drehge- bers;
- Figur 4: ist eine Schnittansicht entlang der Linie A-A von Fi- gur 3;
- Figur 5: eine Figur 2 entsprechende teilweise Schnittansicht, in der eine dritte Ausführungsform des Drehgebers gemäß der vorliegenden Erfindung gezeigt ist.
- Figur 6: eine Figur 2 entsprechende teilweise Schnittansicht, in der eine vierte Ausführungsform des Drehgebers gemäß der vorliegenden Erfindung gezeigt ist.
- Figur 7: eine Figur 2 entsprechende teilweise Schnittansicht, in der eine fünfte Ausführungsform des Drehgebers gemäß der vorliegenden Erfindung gezeigt ist.

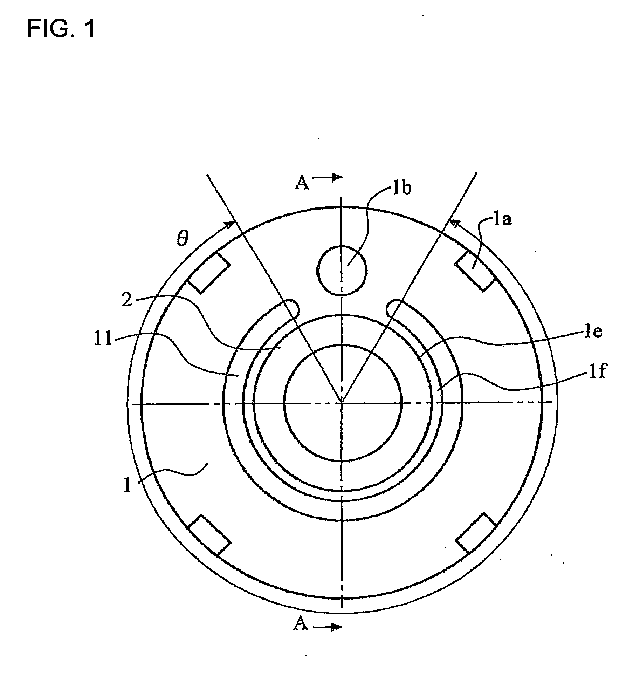

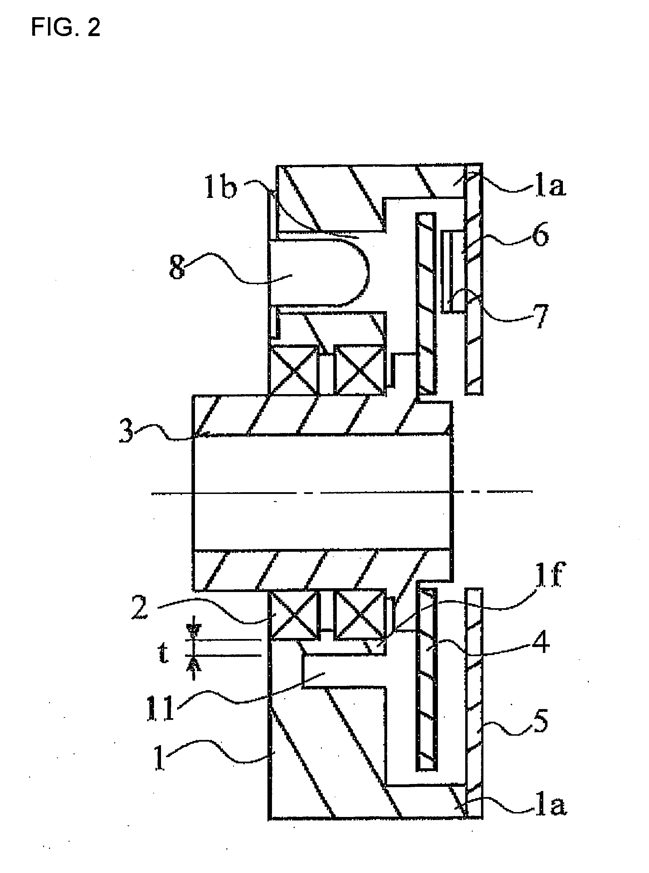

Figur 1 und 2 zeigen eine erste Ausführungsform des Drehgebers gemäß der vorliegenden Erfindung. Figur 1 zeigt eine Vorderansicht mit der Gestaltung des Drehgeber-Grundkörpers und des Lagerbereichs; Figur 2 stelle eine Schnittansicht entlang der Linie A-A von Figur 1 dar, wobei die Darstellung von Figur 1 mit weiteren Komponenten des Drehgebers ergänzt wurde. Zur Erleichterung des Verständnisses des Aufbaus wurden in Figur 2 auch die Grundplattenstützen 1a, die sich eigentlich nicht an dieser Stelle der Schnittdarstellung befinden, im Schnitt angegeben.

Gemäß den Figuren umfasst der Drehgeber gemäß der vorliegenden Erfindung einen Drehgeber-Grundkörper 1, an einem Lagerfixierungsbereich 1e des Drehgeber-Grundkörpers 1 angebrachte Lager 2, und eine an den Lagern 2 angebrachte und dadurch drehbar gehaltene Welle 3, in Form einer Hohlwelle. In diesem Beispiel werden zwei Lager 2 verwendet. Die Welle 3 wird durch die geringfügig voneinander entfernt angeordneten beiden Lager an zwei Punkten gehalten. Der Drehgeber-Grundkörper ist so aufgebaut, dass diese Lager leicht angebracht und positioniert werden können.

Die Welle eines zu messenden Objekts wird durch Einstecken in den hohlen Bereich des in der Figur linken Endes der Welle 3 angebracht, wodurch eine Kopplung der Welle 3 des Drehgebers mit der Umdrehung des zu messenden Objekts möglich wird. Als zu messende Objekte können beispielsweise hochgenaue Positionierungsmotoren wie etwa Servomotoren oder Impulsmotoren, verschiedenste Arten von Motoren oder Antriebsvorrichtungen oder durch Handbewegungseingabevorrichtungen angetriebene Aufbauten angeführt werden. Mit Hilfe des Drehgebers wird ihre Drehposition, ihre Umdrehungsgeschwindigkeit, ihre Umdrehungszahl o.ä. gemessen.

Am rechten Ende der Welle 3 ist eine Teilscheibe 4 angebracht, die sich mit der Drehung der Welle 3 gekoppelt dreht. Durch diese Rotation verändert sich detektionsseitig das Bild einer optischen Messteilung auf der Teilscheibe 4.

An den Stützen 1a des Drehgeber-Grundkörpers 1 ist eine Grundplatte 5 bzw. Platine angebracht, die der Form des Drehgeber-Grundkörpers 1 entspricht. An einer bestimmten Stelle der Grundplatte ist ein Detektorelement 6 wie etwa ein Phototransistor oder eine Photodiode angeordnet, der eine feste Abtastteilung 7 vorgeordnet ist. Zudem sind elektronische Elemente und Schaltungen zur Verarbeitung der elektrischen Signale vom Detektorelement 6 und zur Verbindung nach außen auf der Grundplatte 5 ausgebildet und angeordnet. Das Detektorelement 6 kann auch aus mehreren Zellen aufgebaut sein. Eine Lichtquelle 8, wie etwa eine Leuchtdiode, ist in eine am Drehgeber-Grundkörper 1 ausgebildete Ausnehmung bzw. Öffnung 1b zur Anbringung einer Lichtquelle eingesetzt angeordnet. Die jeweiligen Positionen sind so abgestimmt, dass sich bei dazwischenliegender Teilscheibe 4 die Lichtquelle 8 gerade gegenüber dem Detektorelement 6 befindet. Das Licht der Lichtquelle 8 verläuft durch die an der Teilscheibe 4 ausgebildeten optischen Schlitze und beaufschlagt das Detektorelement 6. Aus dem detektorseitig erfassten Schlitzmuster kann die Umdrehungsposition der Teilscheibe 4, das heißt, die Umdrehungsposition des zu messenden Objekts, erkannt werden.

In der Nähe des Lagerfixierungsbereichs 1e des Drehgeber-Grundkörpers 1 ist ein Vertiefungsbereich 11 so zum Inneren des Drehgebers, d.h. zur Seite, an der die Teilscheibe 4 angeordnet ist, hin geöffnet ausgebildet, dass er den Lagerfixierungsbereich 1e teilweise umgibt. Dadurch wird ein Teil des Lagerfixierungsbereichs 1e zu einem dünnen Bereich 1f mit einer Dicke t. Im Bereich, in dem sich der Vertiefungsbereich 11 nicht fortsetzt, befindet sich die Öffnung 1b zur Anbringung der Lichtquelle, wobei der Vertiefungsbereich 11 so ausgeführt ist, dass er sich von dieser Öffnung gerade fernhält. Der Vertiefungsbereich 11 weist in diesem Beispiel eine Breite auf, die geringfügig enger als die Breite der Lager 2 ist, während seine Tiefe größer als die Dicke eines Lagers ist und bis zu einem Teil (ungefähr 1/3) des Bereichs reicht, in dem das zweite Lager angebracht ist. Der fortlaufende Bereich des Vertiefungsbereichs 11 umfasst in diesem Beispiel einen die Welle 3 umgebenden Winkelbereich θ von etwa 300 °.

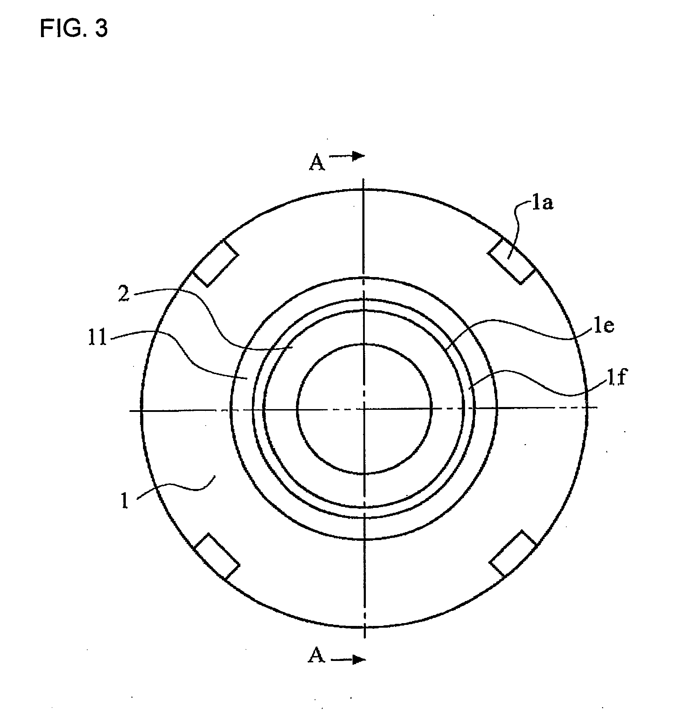

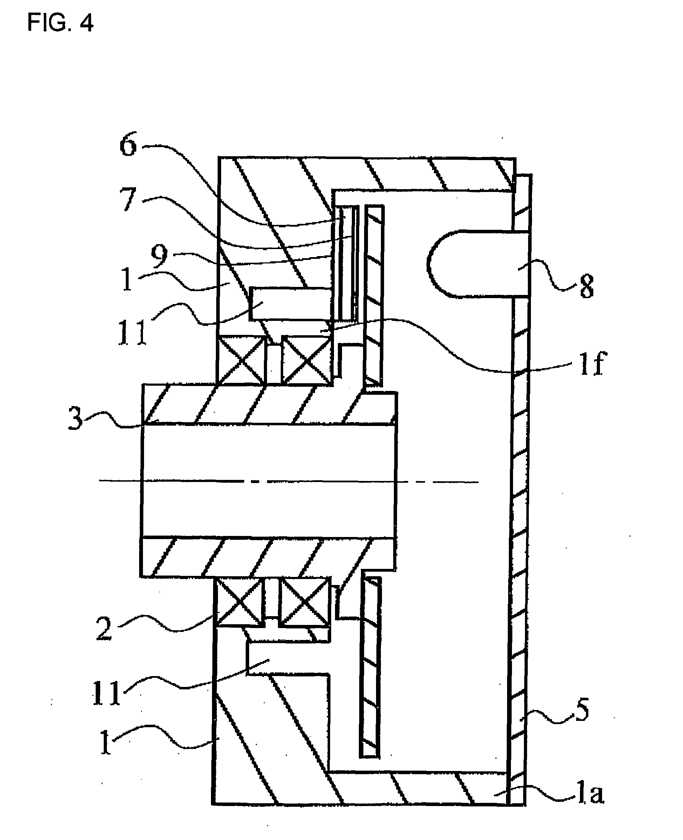

Figur 3 und 4 zeigen eine zweite Ausführungsform des Drehgebers gemäß der vorliegenden Erfindung. Figur 3 zeigt hierbei eine Vorderansicht mit der Gestaltung des Drehgeber-Grundkörpers und des Lagerbereichs; Figur 4 ist eine Schnittansicht entlang der Linie A-A von Figur 3, wobei die Darstellung von Figur 3 mit weiteren Komponenten des Drehgebers ergänzt wurde. Aus den gleichen Gründen wie in Figur 2 wurden in Figur 4 auch die Grundplattenstützen 1a, die sich eigentlich nicht an dieser Stelle der Schnittdarstellung befinden, im Schnitt angegeben.

In diesem Beispiel ist die Anordnung der Lichtquelle 8 und des Detektorelements 6 umgekehrt zum vorhergehenden Beispiel vorgesehen. Die Lichtquelle 8 ist demzufolge an der Grundplatte 5 angeordnet, während das Detektorelement 6, das die vorgeordnete feste Abtastteilung 7 aufweist, über einer weiteren Grundplatte 9 am Drehgeber-Grundkörper 1 angeordnet ist. Daher wird in Abstimmung mit der Höhe der Lichtquelle 8 auch die Länge der Stützen 1a größer, d.h. es erfolgt eine von der Teilscheibe 4 weiter entfernte Anordnung.

Der Vertiefungsbereich 11 ist nunmehr über den gesamten Umfang verlaufend ausgebildet, so dass er die Welle 3 vollständig umgibt. Sofern von der Stärke her keine Probleme bestehen, kommt es auf diese Weise durch die über den gesamten Umfang verlaufende Ausführung ohne Ausbildung einer Stelle, an der der Vertiefungsbereich nicht fortlaufend ist, zu einer nochmals verbesserten Entlastungs- bzw. Entkopplungswirkung. Es können somit Einflüsse durch eventuelle Beanspruchungen noch weiter unterdrückt werden. Die weiteren Komponenten des dargestellten Ausführungsbeispiels entsprechen jenen von Figur 1 und 2, weshalb gleiche Komponenten mit gleichen Bezugszeichen versehen wurden und auf eine nähere Erklärung derselben verzichtet wird.

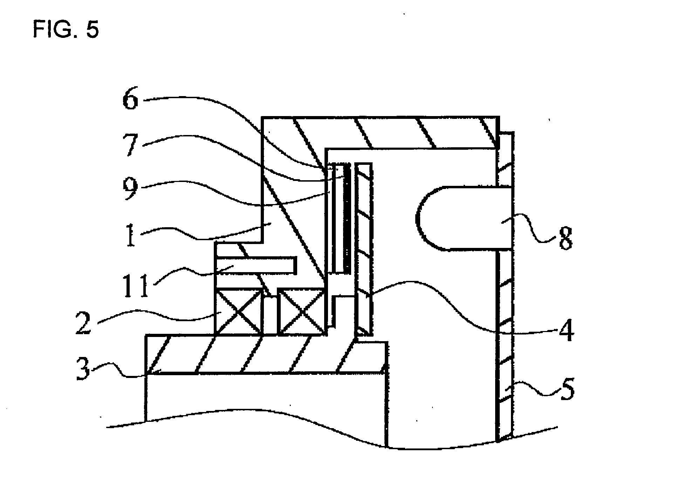

Figur 5 zeigt eine dritte Ausführungsform des Drehgebers gemäß der vorliegenden Erfindung, wobei es sich um eine der Schnittansicht von Figur 4 entsprechende teilweise Schnittansicht handelt. In diesem Beispiel öffnet sich der Vertiefungsbereich 11 an der Drehgeberaußenseite, d.h., an jener Seite, die der Seite, an der die Teilscheibe angebracht ist, gegenüberliegt. Die Breite des Vertiefungsbereichs 11 ist enger als bei der ersten Ausführungsform und bei der zweiten Ausführungsform, und am äußeren Umfangsbereich des Vertiefungsbereichs ist eine Abstufung ausgebildet. Ein derartiger Aufbau eignet sich zur Montage mittels Zusammenstecken einzelner Komponenten bzw. Stufen des Drehgebers. Die weiteren Komponenten entsprechen jenen von Figur 3 und 4, weshalb gleiche Komponenten mit gleichen Bezugszeichen versehen wurden und auf nähere Erklärung derselben verzichtet wird. Auf diese Weise kann der Vertiefungsbereich 11 auch bei einem Drehgeber ausgebildet werden, der einen komponenten- bzw. stufenmäßigen Aufbau aufweist.

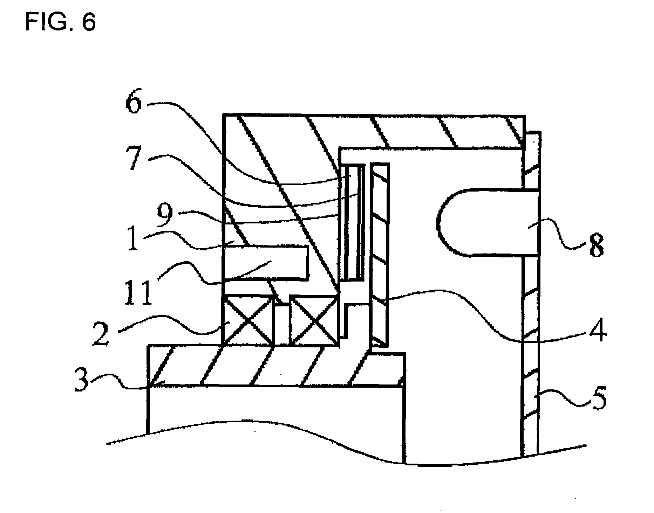

Figur 6 zeigt eine vierte Ausführungsform des Drehgebers gemäß der vorliegenden Erfindung, wobei es sich um eine teilweise Schnittansicht wie bei Figur 5 handelt. Da in diesem Beispiel keine Abstufung wie bei Figur 5 vorgesehen ist, ist die Breite des Vertiefungsbereichs 11 ungefähr gleich zu derjenigen im ersten und zweiten Ausführungsbeispiel. Die weiteren Komponenten entsprechen jenen von Figur 5, weshalb gleiche Komponenten mit den gleichen Bezugszeichen versehen sind und auf eine nähere Erklärung derselben verzichtet wird. Auf diese Weise kann die Breite des Vertiefungsbereichs 11 erweitert werden, wenn kein stufenförmiger Aufbau des Drehgebers vorgesehen ist.

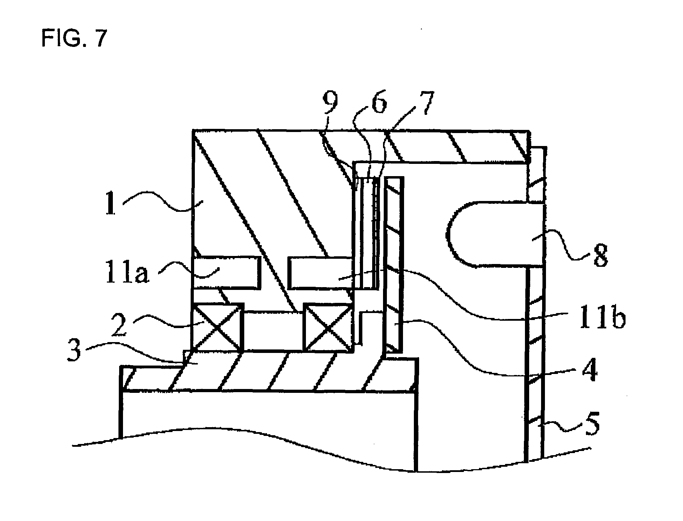

Figur 7 zeigt eine fünfte Ausführungsform des Drehgebers gemäß der vorliegenden Erfindung, wobei es sich um eine teilweise Schnittansicht wie bei Figur 5 handelt. In diesem Beispiel öffnen sich Vertiefungsbereiche 11a, 11b in Form von Teil-Verteilvertiefungsbereichen sowohl an der Drehgeberaußenseite als auch an der Drehgeberinnenseite, d.h., an der Seite, an der die Teilscheibe angebracht ist, und an der gegenüberliegenden Seite. Die Breite der Vertiefungsbereiche 11a, 11b ist ungefähr gleich zu derjenigen in der der ersten und zweiten Ausführungsform. Der Abstand der beiden Lager ist nunmehr vergrößert, wodurch die Dicke des Drehgeber-Grundkörpers 1 groß wird. Die Tiefe der Vertiefungsbereiche 11a, 11b ist größer als die Dicke eines Lagers, um mehr als etwa 1/3 der Dicke eines Lagers größer als diese Dicke. Die weiteren Komponenten entsprechen jenen von Figur 5, weshalb gleiche Komponenten mit gleichen Bezugszeichen versehen wurden und auf eine weitere Erklärung derselben verzichtet wird. Auf diese Weise ist auch die Ausbildung von zwei Vertiefungsbereichen 11a, 11b möglich, die sich an der Außen- bzw. an der Innenseite des Drehgeber-Grundkörpers 1 befinden. Deren Tiefe kann größer als die Lagerdicke ausgebildet werden, sofern die derart resultierende Baugröße des Drehgebers und die resultierenden Bearbeitungskosten hierfür akzeptabel sind.

Die oben erläuterten Ausführungsformen 1 bis 5 zeigen Beispiele für bevorzugte Ausführungsformen erfindungsgemäßer Drehgeber. Die vorliegende Erfindung ist jedoch nicht auf diese Ausführungsformen beschränkt, d.h. es sind selbstverständlich verschiedenste Veränderungen und Abwandlungen möglich.

Die vorteilhaften Wirkungen der erfindungsgemäßen Maßnahmen konnten im übrigen auch experimentell bestätigt werden. So ließen sich übliche, resultierende Drehmomentschwankungen im Bereich zwischen 1,3 bis 1,6 die sich bei einem klein-bauenden Drehgeber gemäß Figur 9 und 10 aufgrund einer Temperaturveränderung von 60°C von Seiten des Grundkörpers her ergaben, mit einem erfindungsgemäßen Aufbau gemäß Figur 1 auf die Größenordnung 1,0 bis 1,2 verringern.

Wie oben erläutert kann der Einfluss durch Beanspruchungen, die sich aus unterschiedlichen Wärmeausdehnungskoeffizienten wegen der unterschiedlichen Materialeigenschaften der Lager und des Drehgeber-Grundkörpers ergeben, durch die Bildung eines Vertiefungsbereichs und die zumindest teilweise Ausbildung eines dünnen Bereichs am Lagerfixierungsbereich verringert werden. Es lässt sich ein Drehgeber mit verbesserter Messgenauigkeit bereitstellen, der zudem keine Belastung auf das zu messende Objekt ausübt.

Die vorliegende Erfindung ist für zur Anbringung der Lager am Grundkörper verschiedenster Arten von Drehgebern einsetzbar, wie etwa optischen, magnetischen oder induktiven Drehgebern, Resolvern etc..

## Patentansprüche

1. Drehgeber zur Feststellung der Umdrehung eines zu messenden Objekts mit
- einer Welle (3), die mit der Drehung des zu messenden Objekts gekoppelt ist und an deren einem Ende eine Teilscheibe (4) angebracht ist,
- mindestens einem Lager (2), in welchem die Welle (3) drehbar gelagert ist und
- einem Drehgeber-Grundkörper (1) mit einem Lagerfixierungsbereich (1e), an dem das Lager (2) fixiert ist, wobei am Drehgeber-Grundkörper (1) mindestens ein Vertiefungsbereich (11) ausgebildet ist, der zur Seite, an der die Teilscheibe (4) angeordnet ist, geöffnet ausgebildet ist, so dass ein Teil des Lagerfixierungsbereichs (1e) als dünner Bereich (1f) ausgebildet ist und der Vertiefungsbereich (11) entlang des Umfangs des Lagerfixierungsbereichs (1e) mit einer bestimmten Tiefe so fortlaufend ausgebildet ist, dass er zumindest den halben Umfang des Lagerfixierungsbereichs (1e) umgibt.

2. Drehgeber nach Anspruch 1, wobei die Tiefe des Vertiefungsbereichs (11) zumindest größer als die Ausdehnung eines Lagers (2) in Richtung der Wellen-Längsachse ist.

3. Drehgeber nach Anspruch 1, wobei sich der Vertiefungsbereich (11) über den gesamten Umfang des Lagerfixierungsbereichs (1e) erstreckt.

4. Drehgeber nach Anspruch 1, wobei der Vertiefungsbereich (11) im Inneren des Drehgebers ausgebildet ist.

5. Drehgeber nach Anspruch 1, wobei der Vertiefungsbereich (11) an der Drehgeber-Außenseite ausgebildet ist.

6. Drehgeber nach Anspruch 1, wobei der Vertiefungsbereich zwei Teil-Vertiefungsbereiche (11a, 11b) umfasst, von denen einer erster Teil-Vertiefungsbereich (11b) im Inneren des Drehgebers ausgebildet ist und ein zweiter Teil-Vertiefungsbereich (11a) an der Drehgeber-Außenseite ausgebildet ist.

## Claims

1. A rotary encoder for determining the rotation of an object to be measured comprising
- a shaft (3), which is coupled to the rotation of the object to be measured and to the one end of which a code disk (4) is fixed,
- at least one bearing (2) in which the shaft (3) is rotatably mounted and
- a rotary encoder base body (1) comprising a bearing fixing area (1e) to which the bearing (2) is fixed, wherein at least one recess area (11) is embodied at the rotary encoder base body (1), said recess area (11) being embodied so as to be open towards the side at which the code disk (4) is arranged so that a part of the bearing fixing area (1e) is embodied as a thin area (1f) and the recess area (11) is continuously embodied along the periphery of the bearing fixing area (1e) at a defined depth in such a way that it surrounds at least half of the periphery of the bearing fixing area (1e).

2. The rotary encoder according to claim 1, wherein the depth of the recess area (11) is at least greater than the expansion of a bearing (2) in the direction of the longitudinal axis of the shaft.

3. The rotary encoder according to claim 1, wherein the recess area (11) extends across the entire periphery of the bearing fixing area (1e).

4. The rotary encoder according to claim 1, wherein the recess area (11) is embodied in the interior of the rotary encoder.

5. The rotary encoder according to claim 1, wherein the recess area (11) is embodied on the exterior of the rotary encoder.

6. The rotary encoder according to claim 1, wherein the recess area comprises two partial recess areas (11a, 11b), a first partial recess area (11b) of which is embodied in the interior of the rotary encoder and a second partial recess area (11a) is embodied at the exterior of the rotary encoder.

## Revendications

1. Capteur rotatif pour la détermination la rotation d'un objet à mesurer, avec
- un arbre (3) couplé à la rotation de l'objet à mesurer et à l'une des extrémités duquel est monté un disque gradué (4),
- au moins un palier (2), dans lequel l'arbre (3) est monté de façon rotative, et
- un corps de base de capteur rotatif (1), avec une région de fixation de palier (le), sur laquelle est fixé le palier (2), au moins une région de renfoncement (11) étant formée dans le corps de base de capteur rotatif (1), conçu ouvert du côté disposé sur le disque gradué (4), de sorte qu'une partie de la région de fixation de palier (1e) est conçue comme une région fine (1f), et la région de renfoncement (11) le long du pourtour de la région de fixation de palier (1e) est conçue en s'étendant de telle manière, avec une profondeur déterminée, qu'elle entoure au moins la moitié du pourtour de la région de fixation de palier (1e).

2. Capteur rotatif selon la revendication 1, dans lequel la profondeur de la région de renfoncement (11) est au moins supérieure à l'extension d'un palier (2) dans le sens de l'axe longitudinal de l'arbre.

3. Capteur rotatif selon la revendication 1, dans lequel la région de renfoncement (11) s'étend sur l'ensemble du pourtour de la région de fixation de palier (1e).

4. Capteur rotatif selon la revendication 1, dans lequel la région de renfoncement (11) est formée à l'intérieur d'un capteur rotatif.

5. Capteur rotatif selon la revendication 1, dans lequel la région de renfoncement (11) est formée du côté extérieur du capteur rotatif.

6. Capteur rotatif selon la revendication 1, dans lequel la région de renfoncement comprend deux régions de renfoncement partielles (11a, 11b), parmi lesquelles une première région de renfoncement partielle (11b) est formée à l'intérieur du capteur rotatif et une deuxième région de renfoncement partielle (11a) est formée du côté extérieur du capteur rotatif.
